Europäisches Patentamt

European Patent Office

Office européen des brevets

(19)

(11) EP 0 446 084 B1

(12) **FASCICULE DE BREVET EUROPEEN**

(45) Date de publication et mention
de la délivrance du brevet:
**18.06.1997 Bulletin 1997/25**

(51) Int Cl.6: **G06F 15/80**

(21) Numéro de dépôt: **91400303.3**

(22) Date de dépôt: **08.02.1991**

(54) **Procédé de classification mis en oeuvre dans un réseau de neurones hiérarchisé**

Verfahren zur Klassifikation in einem hierarchisierten neuronalen Netzwerk

Classification method in a hierarchized neural network

(84) Etats contractants désignés:
**DE FR GB**

(30) Priorité: **09.02.1990 FR 9001529**

(43) Date de publication de la demande:
**11.09.1991 Bulletin 1991/37**

(73) Titulaires:
• **LABORATOIRES D'ELECTRONIQUE PHILIPS
S.A.S.**
**94450 Limeil-Brévannes (FR)**
Etats contractants désignés:
**FR**
• **Philips Electronics N.V.**
**5621 BA Eindhoven (NL)**
Etats contractants désignés:
**DE GB**

(72) Inventeurs:
• **Sirat, Jacques-Ariel, Société Civile S.P.I.D.**
**F-75008 Paris (FR)**
• **Nadal, Jean-Pierre, Société Civile S.P.I.D.**
**F-75008 Paris (FR)**

(74) Mandataire: **Charpail, François et al**
**Société Civile S.P.I.D.**
**156, Boulevard Haussmann**
**75008 Paris (FR)**

(56) Documents cités:
• **IEEE INTERNATIONAL CONFERENCE ON
NEURAL NETWORKS, San Diego, CA, 24-27
juillet 1988, pages I-247 - I-254; C.
KOUTSOUGERAS et al.: "Training of a neural
network for pattern classification based on an
entropy measure"**
• **NEURAL NETWORKS, vol. 2, no. 6, 1989, pages
459-473; T.D. SANGER: "Optimal unsupervised
learning in a single-layer linear feedforward
neural network"**
• **PROCEEDINGS 1988 IEEE INTERNATIONAL
CONFERENCE ON SYSTEMS, MAN, AND
CYBERNETICS, Beijing et Shenyang, 8-12 août
1988, vol. 1, pages 46-49; S. BANDYOPADHYAY
et al.: "Searching for conceptual connectivity
among a set of concepts"**
• **IEEE PROCEEDINGS 8TH CONFERENCE ON
PATTERN RECOGNITION, Paris, 27-31 octobre
1986, pages 849-852; S.I. GALLANT: "Optimal
linear discriminants"**
• **J. PHYS. A: MATH. GEN., vol. 22, 1989, pages
2191-2203; M. MEZARD et al.: "Learning in
feedforward layered networks: the tiling
algorithm"**
• **NETWORK - COMPUTATION IN NEURAL
SYSTEMS, vol. 1, no. 4, octobre 1990, pages
423-438; J.A. SIRAT et al.: "Neural trees: a new
tool for classification"**

## Description

L'invention concerne un procédé de classification mis en oeuvre dans un réseau de neurones en arbre, comprenant des étapes d'apprentissage au cours desquelles le réseau de neurones détermine des coefficients synaptiques pour classifier un groupe d'exemples répartis sur plusieurs classes.

Elle concerne également un réseau de neurones mettant en oeuvre ce procédé.

Les réseaux de neurones trouvent leurs applications dans les problèmes de classification en particulier pour la reconnaissance de forme, de caractères, le traitement du signal de la parole, le traitement d'images, de compression de l'information...

Les réseaux de neurones sont constitués d'automates non-linéaires généralement connectés entre eux par des synapses auxquelles sont affectés des coefficients synaptiques. Ils permettent de traiter des problèmes qui le sont difficilement par les ordinateurs séquentiels classiques.

Les deux types de réseaux les plus répandus sont :

- les réseaux pleinement connectés dits de Hopfield
- les réseaux en couches : les neurones sont regroupés en couches successives, chaque neurone est connecté à tous les neurones de la couche suivante. Dans l'organisation la plus générale l'information passe de bornes d'entrée (passive) à une couche d'entrée (active) puis successivement à chaque couche cachée (active) puis à une couche de sortie (active). Dans l'organisation la plus simplifiée l'information passe de bornes d'entrée (passive) à une seule couche (active). L'information d'entrée est formée d'une suite de vecteurs ayant plusieurs composantes.

Ces systèmes sont capables d'apprendre par l'exemple ou de s'auto-organiser. Les temps de calcul très longs sur ordinateur séquentiel peuvent se réduire considérablement en parallélisant les opérations qui comprennent des phases d'apprentissage et des phases de résolution.

Pour effectuer un traitement donné, les réseaux de neurones doivent au préalable apprendre à l'effectuer. Cette phase appelée apprentissage fait appel à des exemples. Pour de nombreux algorithmes, les résultats que l'on doit obtenir en sortie avec ces exemples sont généralement connus à l'avance. Dans un premier temps le réseau de neurones qui n'est pas encore adapté à la tâche prévue, va délivrer des résultats erronés. On détermine alors une erreur entre les résultats obtenus et ceux que l'on aurait dû obtenir et, à partir d'un critère d'adaptation, on modifie les coefficients synaptiques pour permettre au réseau de neurones d'apprendre l'exemple choisi. Cette étape est réitérée sur le lot d'exemples considérés comme nécessaires à un apprentissage satisfaisant du réseau de neurones.

Les algorithmes d'apprentissage se répartissent en deux classes :

- les apprentissages locaux, où la modification d'un coefficient synaptique $C_{ij}$ reliant un neurone j à un neurone i ne dépend que de l'information localisée sur les neurones i et j,
- les apprentissages non-locaux, où elle dépend d'informations situées dans tout le réseau. Ce dernier apprentissage est par exemple celui de la rétropropagation de l'erreur dans des réseaux en couches.

Des informations sur divers types de réseaux de neurones peuvent par exemple être trouvées dans l'article de R.P. LIPPMANN, "An introduction to computing with neural nets" IEEE ASSP Magazine Avril 1987 p.4 à 22.

Dans ces réseaux de neurones l'organisation de la structure est fixe (en couches ou pleinement connectée) et les liaisons entre neurones sont fixées à l'avance.

L'apprentissage qui est alors effectué a pour objectif de chercher une structure optimale en opérant sur différentes architectures puis de faire un choix a posteriori.

Un algorithme qui permet de déterminer l'architecture au cours de l'apprentissage a été proposé par : M. MEZARD et J.P. NADAL dans "Learning in Feedforward Layered networks : the tiling algorithm" J. Phys. A : Math. Gen. 22 (1989) p.2191-2203.

Pour cela on initialise l'apprentissage en optimisant les coefficients synaptiques d'un premier neurone affecté à une première couche et si ce neurone ne suffit pas pour accomplir la tâche de classification on ajoute un neurone supplémentaire dans la couche en cours ou dans la couche suivante qui est ainsi initialisée. Cette approche permet d'apprendre l'architecture et les paramètres de réseaux en couches (Multilayer Perceptrons) en séparant les sorties en deux classes. Cependant en mode d'exploitation ces réseaux ne sont pas optimaux en termes de temps de calcul car il faut mettre à jour tous les neurones systématiquement.

Ils ne sont pas optimaux non plus en compacité car il faut faire appel à un nombre de neurones beaucoup plus élevé que le nombre de neurones théorique. De plus dans le cas de problèmes évolutifs il est nécessaire de recommencer la totalité de l'apprentissage lorsque les paramètres d'entrée ne sont que faiblement modifiés par exemple lorsque dans un problème de classification on ajoute une classe aux classes déjà apprises.

On connait par ailleurs un réseau de neurones ayant une structure en arbre décrite dans l'article : "Training of a neural network for pattern classification based on an entropy measure" de C. KOUTSOUGERAS et C. A. PAPACHRISTOU dans IEEE International Conference on Neural Networks San Diego Californie July 1988 p.1-247; 1-254.

Une telle structure est adaptée pour opérer des classifications en distinguant deux classes dans les données d'entrée. Un neurone est constitué d'une cellule (avec ses coefficients synaptiques et sa fonction non linéaire) ayant des entrées, deux sorties complémentaires et une entrée de validation E. Lorsque le premier neurone créé ne peut opérer la séparation complète des deux classes, on génère systématiquement deux neurones successeurs dont les entrées de validation E sont contrôlées respectivement par les deux sorties complémentaires du premier neurone. Ce réseau de neurones est construit en ajoutant des rangées successives de neurones. En effet l'article précise que : chaque sortie de chaque unité (neurone) est connectée à l'entrée E d'une autre unité (neurone) de la rangée suivante. Avec un premier rang constitué par le premier neurone (neurone père), le second rang est formé par tous les neurones fils, le troisième rang est formé par tous les neurones petits-fils et ainsi de suite. Donc une couche d'ordre k renferme $2^{k-1}$ neurones. On créé ainsi un arbre binaire complet. D'autre part ce réseau de neurones est prévu pour opérer une classification entre deux classes seulement. Dans l'espace de ses entrées, ce réseau de neurones résout un problème de topologie, c'est-à-dire qu'il distingue les zones de l'espace appartenant à une classe et des zones appartenant à l'autre classe. Ce document n'enseigne pas comment opérer pour classifier des données d'entrée réparties sur plus de deux classes.

Le problème posé est donc de concevoir une architecture de réseaux de neurones qui traite des problèmes de classification à multiclasses et qui soit plus compacte que les architectures en couches connues. Il est demandé à cette architecture d'opérer très rapidement. Il est également demandé à cette architecture d'être plus souple que les architectures connues et d'être aisément évolutive.

La solution consiste en un procédé de classification qui opère des classifications sur plus de deux classes dans lequel l'apprentissage comprend les étapes suivantes :

A - Répartition des classes relatives aux exemples à classer suivant deux sous-groupes de classes,
B - calcul des coefficients synaptiques d'un neurone pour qu'il tende à distinguer parmi, le groupe d'exemples, deux sous-groupes d'exemples approchant le mieux possible la répartition suivant lesdits deux sous-groupes de classes,
C - test de l'homogénéité des sous-groupes d'exemples distingués pour déterminer s'ils renferment une classe unique,
D - lorsqu'un neurone distingue une classe unique, mémorisation de l'adresse dudit neurone et mémorisation de ladite classe unique,
E - et lorsqu'un neurone distingue un sous-groupe inhomogène, répartition de chaque sous-groupe d'exemples inhomogène en deux nouveaux sous-groupes de classes en reprenant le procédé à l'étape A, puis génération d'un neurone successeur pour chaque sous-groupe d'exemples inhomogène et mémorisation de l'adresse dudit neurone successeur, le procédé étant répété jusqu'à ce que les nouveaux sous-groupes d'exemples distingués par les neurones successeurs correspondent tous à un sous-groupe de classe homogène.

Ce procédé se rapporte à un réseau de neurones hiérarchique où l'interconnexion des neurones et la mise à jour des coefficients synaptiques suivent un chemin dans un arbre de décision. Avec un réseau de neurones organisé en arbre tous les neurones opèrent dans l'espace des entrées (tous les neurones qui sont créés reçoivent toutes les composantes des vecteurs d'entrée). L'architecture qui s'en déduit est très compacte. Les durées d'apprentissage sont très réduites car l'architecture peut être très proche de l'architecture optimale selon le choix des sous-classes prédéterminées souhaitées traitées par le neurone. En particulier avec un premier rang constitué par le premier neurone (neurone père), le second rang peut ne pas contenir tous les neurones fils, et de même pour les autres rangs, c'est-à-dire que les neurones qui ne sont pas réellement utiles pour la séparation des classes ne sont pas créés.

En phase d'exécution, les durées d'exécution sont également très réduites car pour une classe donnée elles mettent en oeuvre uniquement les neurones nécessaires à la distinction de ladite classe. En effet c'est le résultat délivré par un neurone qui détermine l'adresse du neurone successeur à faire agir. Cette adresse a été mémorisée lors de l'apprentissage. Ceci est différent de la situation traitée dans l'article de G. KOUTSOUGERAS et al. où l'on ne mémorise pas les adresses des neurones, car systématiquement pour un rang k, la totalité des $2^{k-1}$ neurones est créée.

Pour effectuer l'apprentissage on calcule les coefficients synaptiques d'un neurone père pour distinguer, dans un groupe M d'exemples, un sous-groupe de classes particulier P.

Lorsque par exemple le groupe M d'exemples couvre les classes A, B, C, D, la distinction peut consister à distinguer un sous-groupe $M_+^1$ qui isole une des classes par exemple la classe B. Dans ce cas le sous-groupe complémentaire $M_-^1$ est constitué des autres classes A, C, D.

Il est également possible pour chacune des classes A, B, C, D de déterminer préalablement un critère d'erreurs sur l'aptitude du neurone à l'isoler puis de sélectionner la classe ayant le critère d'erreurs le plus petit pour mettre en oeuvre le procédé.

Cette distinction des exemples en deux sous-groupes, opérée par un neurone, peut également être effectuée pour tendre à se conformer à une répartition des classes effectuée par une analyse en composantes principales de la distribution d'exemples, en opérant la répartition en deux groupes en relation avec le centre de gravité de la distribution d'exemples.

La classe particulière que le neurone doit distinguer peut être également déterminée à partir d'apprentissages antérieurs opérés sur des réseaux en couches. Dans cette situation un tel réseau de neurones en couches a adapté ses coefficients synaptiques pour la base d'exemples multiclasses. La première couche qui opère sur les potentiels d'entrée agit comme un séparateur de classes. On peut ainsi sélectionner dans cette première couche le neurone qui opère une distinction la plus rapprochée de la répartition particulière souhaitée. Dans ce cas les coefficients synaptiques initiaux du neurone sont déterminés à partir d'un réseau de neurones en couches en y sélectionnant les coefficients synaptiques d'un neurone qui distingue une classe approchant au mieux ladite classe particulière.

Au lieu d'isoler une classe prédéterminée on peut vouloir opérer une répartition différente par exemple équilibrer la population des exemples dans les deux groupes d'exemples séparés par le séparateur. Ce sont alors les coefficients synaptiques du neurone séparateur le mieux adapté du réseau de neurone en couches qui seront utilisés pour entreprendre l'apprentissage du neurone concerné de l'arbre.

Avantageusement on exploite ainsi les résultats satisfaisants obtenus dans une architecture précédente pour construire une architecture en arbre plus compacte plus rapide et plus performante.

La séparation effectuée en mettant dans le groupe $M_+^1$ la classe particulière P que l'on désire isoler à l'aide du neurone peut n'être obtenue qu'imparfaitement lorsque les classes d'exemples ne sont pas linéairement séparables. Ainsi des exemples ayant la même classe que la classe particulière P peuvent se trouver dans le sous-groupe complémentaire $M_-^1$ après distinction par le premier neurone.

Le groupe $M_+^1$ et le groupe complémentaire $M_-^1$ sont alors testés en homogénéité pour déterminer s'ils renferment une classe unique. Si l'un ou l'autre de ces groupes est homogène, la distinction de ce groupe est achevée. Si l'un ou l'autre de ces groupes est inhomogène, pour chaque groupe on génère un neurone successeur qui distingue deux nouveaux groupes dans le groupe inhomogène. Pour cela le procédé calcule des coefficients synaptiques pour ce neurone successeur qui opère cette distinction selon un critère de dichotomie. Cette distinction opère sur les exemples d'entrée (vecteurs) qui ont généré le groupe inhomogène concerné. Cette procédure de dichotomie des exemples et de génération de neurone successeur est itérée sur les générations successives.

L'apprentissage de chaque neurone opérant une séparation sur deux sous-groupes peut présenter plusieurs variantes. Préférentiellement on met en oeuvre l'algorithme Pocket utilisé par M. MEZARD et J.P. NADAL et décrit par S. GALLANT dans "Optimal Linear Discriminants" IEEE proc. 8th. Conf. on Pattern Recognition, Paris (1986). Cet algorithme Pocket peut être utilisé pour opérer la séparation effectuée par chaque neurone.

Il est aussi possible pour chaque neurone d'utiliser un critère d'apprentissage des "Perceptrons" qui réactualise les coefficients synaptiques à partir d'erreurs qui caractérisent l'écart pour un exemple quelconque entre un résultat obtenu en sortie du réseau de neurones et le résultat attendu. Ces critères d'apprentissage sont connus de l'homme du métier.

Ainsi pour effectuer l'apprentissage d'un neurone quelconque le calcul de ses coefficients synaptiques met en oeuvre soit l'algorithme "Pocket" soit une règle d'apprentissage de type "Perceptron" soit une règle d'apprentissage de type Hebb (voir R.P. LIPPMANN déjà cité et R. MEIR et E. DOMANY dans "Iterated Learning in a layered Feed-Forward Neural Network Phys. Rev. A, vol.37, n°7, 1988, p.2660).

L'invention concerne également un réseau de neurones mettant en oeuvre le procédé.

Le réseau de neurones est d'abord construit selon une architecture en arbre puis il est utilisé pour opérer des tâches de classification. Les branches de l'arbre sont alors parcourues en fonction de leur construction, les adresses des neurones successifs étant mémorisées au cours de l'apprentissage. Le neurone successeur dépend du résultat délivré par un neurone précédent. Il est donc nécessaire qu'une mémoire permette de parcourir l'arbre en fonction du résultat obtenu en sortie de chaque neurone. Pour cela le réseau de neurones est muni d'une mémoire qui stocke un dictionnaire d'adresses qui, selon le résultat obtenu sur un neurone quelconque, met en oeuvre un neurone suivant selon une organisation en arbre. La sélection des exemples traités par chaque neurone pouvant être différente pour chaque neurone en fonction du résultat du neurone précédent, le réseau de neurones comprend des moyens qui permettent de sélectionner les exemples à traiter par chaque neurone successeur.

Il est également possible que le réseau de neurones ne soit pas conçu pour effectuer lui-même l'apprentissage mais qu'il ne puisse opérer que des taches de classification proprement dites (exécution) pour lesquelles il aura été soit conçu soit programmé. Pour cela seront fixés : le nombre de neurones, leurs coefficients synaptiques, l'ordre de succession, le nombre et les types de classes. L'invention est alors remarquable en ce qu'elle concerne un réseau de neurones comprenant des bornes d'entrée qui reçoivent des vecteurs de mots de données à classifier, des neurones qui sont reliés aux bornes d'entrée, des coefficients synaptiques qui définissent les forces de liaison entre les neurones, les neurones étant connectés entre eux selon une organisation en arbre, les neurones délivrant des résultats à deux états caractérisé en ce qu'il opère la classification de mots de données multiclasses, le nombre de neurones, leurs coefficients synaptiques, l'ordre de succession des neurones, les classes à distinguer et leur nombre étant préalablement déterminés par une méthode d'apprentissage spécifique à la classification à effectuer, ledit ordre de succession étant stocké dans un premier organe de mémorisation qui est adressé par lesdits états des résultats des neurones, lesdites classes à distinguer étant stockées dans un second organe de mémorisation, un calculateur hôte testant l'homogénéité des résultats délivrés par chaque neurone,

- et lorsque l'homogénéité est satisfaite, le calculateur hote adresse le second organe de mémorisation pour délivrer la classe distinguée,
- et lorsque l'homogénéité n'est pas satisfaite, le calculateur hote adresse le premier organe de mémorisation qui donne l'adresse du neurone successeur.

L'invention sera mieux comprise à l'aide des figures suivantes données à titre d'exemples non limitatifs et qui représentent :

Figures 1A, 1B : une représentation dans l'espace des entrées du mode d'action des séparateurs dans une base d'exemples à trois classes A, B, C et la structure d'arbre qui lui correspond,
Figure 2 : un organigramme relatif à un arbre de neurones qui indique le mécanisme de distinction des classes et les sous-groupes d'exemples concernés.
Figure 3 : une représentation de la séparation des exemples.
Figures 4A, 4C : deux représentations de deux exemples de répartition des classes,
Figure 4B : une représentation des composantes principales d'une distribution,
Figure 5 : un exemple d'algorithme constitué par l'algorithme Pocket permettant d'opérer la séparation entre deux groupes de classes,
Figure 6 : un schéma d'un réseau de neurones organisé en arbre de neurones.

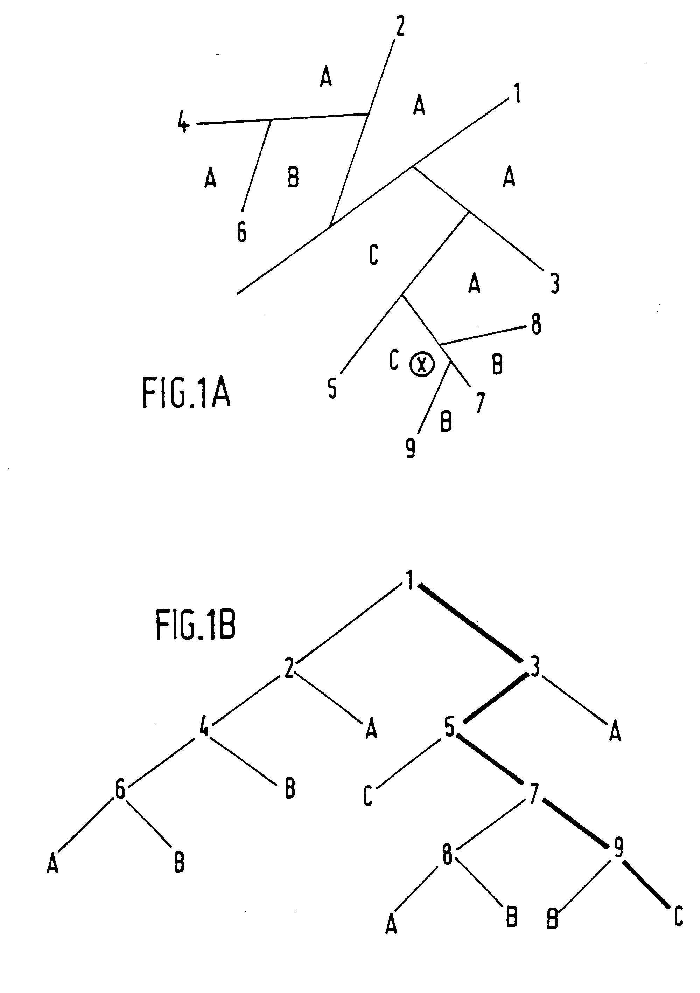

La figure 1A est une représentation dans l'espace des entrées du mode d'action des séparateurs.

La situation traitée comporte 3 classes A, B, C réparties sur un groupe d'exemples.

Sur cette figure, le séparateur 1 sépare l'espace en deux parties :

- la partie supérieure comprend un premier sous-groupe d'exemples (classes A, B) et
- la partie inférieure comprend un second sous-groupe d'exemples (classes A, B, C).

Le séparateur successeur 2 isole la classe A d'une part et les autres sous-groupes d'exemples (classes A, B) d'autre part.

Il faut ajouter ensuite les séparateurs 4 puis 6 opérant sur le premier sous-groupe d'exemples pour opérer la séparation complète des classes A et B.

De même pour le second sous-groupe d'exemples, après l'action du séparateur 1, si l'on souhaite séparer un exemple représenté par le symbole X (classe C) il faut faire intervenir dans l'ordre par exemple les séparateurs 3, 5, 7, 9.

Ces mêmes résultats sont représentés sous forme d'arbre sur la figure 1B où les mêmes chiffres représentent les neurones (séparateurs) qui opèrent la séparation. Le neurone père est le neurone 1 les autres étant des neurones successeurs. Ainsi dans la situation représentée la séparation complète des trois classes nécessite neuf neurones. Le parcours de l'arbre pour isoler le symbole X de la classe C est représenté en traits gras sur la figure 1B. Tous les neurones sont reliés à des bornes d'entrée qui reçoivent les composantes des vecteurs d'entrée. Chaque neurone opère sur le groupe/ sous-groupe d'exemples/de données déterminé par le résultat du neurone qui le précède.

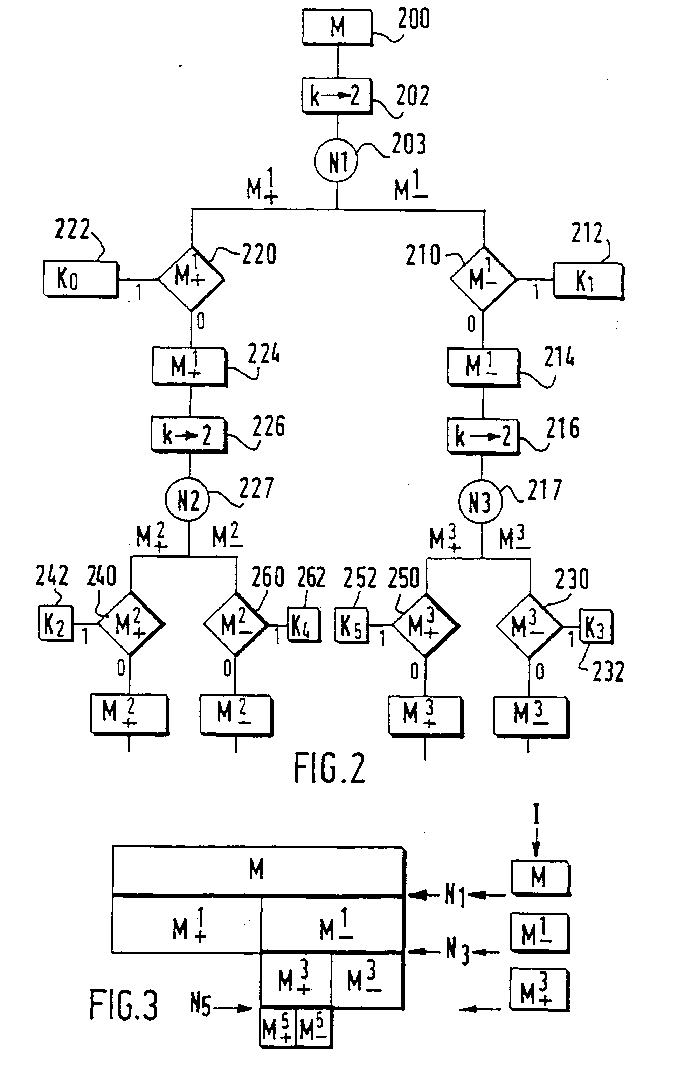

La figure 2 représente un organigramme relatif à une structure en arbre où apparaissent différentes étapes du procédé. Celui-ci opère à partir d'une sélection d'un groupe M d'exemples (étape 200) choisis pour réaliser un apprentissage du réseau de neurones et l'adapter au traitement d'une tâche définie. Par définition ce groupe M d'exemples est inhomogène. L'apprentissage doit être compris ici dans un sens large car il consiste non seulement à déterminer les coefficients synaptiques requis (apprendre au réseau de neurones) mais simultanément à déterminer le nombre de neurones nécessaires pour accomplir cette tâche. Il s'agit donc également de déterminer la taille que doit avoir le réseau de neurones.

Le groupe M d'exemples est formé par exemple de k classes différentes. L'étape 202 consiste à répartir préalablement les k classes en deux sous-groupes de classes $G_+^1$ et $G_-^1$ afin de ramener le problème de classification de k classes à un problème de classification de deux sous-groupes de classes $G_+^1$ et $G_-^1$. Au cours de l'étape 203 le procédé détermine les coefficients synaptiques d'un neurone père $N_1$ qui opère sur l'ensemble du groupe d'exemples M. Ces coefficients synaptiques sont déterminés pour que le réseau de neurones tende à opérer la distinction, parmi le groupe d'exemples M, de deux sous-groupes $M_+^1$ et $M_-^1$ renfermant au mieux les deux sous-groupes de classes préalablement répartis $G_+^1$, $G_-^1$. Le mécanisme d'apprentissage qui permet de déterminer les coefficients synaptiques est effectué préférentiellement par l'algorithme Pocket décrit ci-après. Dans ces conditions l'apprentissage s'avère être optimal à la fois pour la durée d'exécution et pour le matériel nécessaire à le mettre en oeuvre. La sortie du réseau de neurones s'analyse sous forme de l'affectation correcte ou non de chaque classe au sous-groupe prévu. Pour fixer les idées on peut par exemple chercher à isoler une classe C ($G_+^1$ = C) dans un groupe d'exemples qui comprend plusieurs classes A, B, C, D. Le sous-groupe de classes $G_-^1$ est alors formé par le groupe d'exemples M dans lequel on a extrait le sous-groupe de classes $G_+^1$. L'apprentissage du neurone père va ainsi tendre à faire correspondre $M_+^1$ avec $G_+^1$ et $M_-^1$ avec $G_-^1$.

Les classes A, B, C, D n'étant pas a priori linéairement séparables, le sous-groupe $_M1^-$ ainsi séparé peut comprendre lui aussi des éléments de classe C. D'autres répartitions plus complexes peuvent être soumises à l'action du neurone père comme cela est exposé plus loin.

Les exemples générant les sous-groupes d'exemples $_M1^+$ et $_M1^-$ sont ensuite traités séparément. On examine l'homogénéité de $_M1^+$ et de $_M1^-$, étapes 220, 210.

En effet le neurone père a pour tâche de distinguer un sous-groupe de classes prédéfini. Si le groupe d'exemples $_M1^+$ (respectivement $_M1^-$) est homogène, c'est-à-dire s'il ne contient que des exemples d'une même classe, ces exemples sont ainsi distingués, étape 222 (respectivement étape 212) (classes $K_0$, $K_1$).

Si le sous-groupe d'exemples $_M1^+$ (respectivement $_M1^-$) est inhomogène, c'est-à-dire s'il contient des exemples de classes différentes, il faut continuer la distinction sur ce groupe d'exemples inhomogène, étape 224 (respectivement étape 214).

Pour cela on opère une répartition du sous-groupe d'exemples $_M1^+$ en deux sous-groupes de classes selon le même mécanisme de répartition décrit à l'étape 202 en opérant sur le nombre de classes restant dans le sous-groupe d'exemples $_M1^+$. Puis on ajoute un neurone successeur $N_2$ (respectivement $N_3$) et un mécanisme analogue de dichotomie est opéré. A la sortie du neurone successeur, $N_2$ par exemple, on obtient ainsi les sous-groupes d'exemples $_M2^+$ et $_M2^-$ qui sont eux-mêmes testés (étapes 240, 260) en ce qui concerne leur homogénéité pour déterminer s'ils isolent ou non des classes d'exemples (classes $K_2$, $K_4$) (étapes 242, 262). Un processus identique s'opère à la sortie du neurone successeur $N_3$ (étapes 250, 230, 252, 232). Le procédé selon l'invention s'achève lorsque tous les exemples du groupe M ont ainsi été traités et que chaque sous-groupe d'exemples isolé ne contient que des exemples appartenant à la même classe. Le nombre de neurones et leurs coefficients synaptiques sont ainsi déterminés par le procédé lui-même et l'opération d'apprentissage est achevée pour ce groupe d'exemples. Le réseau de neurones peut alors être exploité pour opérer des tâches de classification.

La figure 3 est une autre représentation des étapes de séparation opérées par le procédé selon l'invention. Sur le groupe inhomogène M d'exemples le neurone père $N_1$ (représenté par un trait gras) effectue la distinction selon les sous-groupes d'exemples $_M1^+$ et $_M1^-$. On suppose sur cette représentation que le sous-groupe d'exemples $_M1^+$ est homogène et contient une classe unique. On suppose également que le sous-groupe d'exemples $_M1^-$ est inhomogène. Le neurone successeur $N_3$ (trait gras) sépare $_M1^-$ en deux sous-groupes d'exemples $_M3^+$ et $_M3^-$. Le sous-groupe $_M3^-$ est homogène et le sous-groupe $_M3^+$ est inhomogène. Ce dernier est séparé par le neurone successeur $N_5$ (trait gras) en deux sous-groupes d'exemples $_M5^+$ et $_M5^-$ qui sont homogènes dans la situation représentée. Le procédé de classification est alors terminé et le réseau de neurones en arbre peut être utilisé pour opérer des classifications sur d'autres groupes de données. Sur la figure 3 la colonne I indique le groupe M ou les sous-groupes d'exemples $_M1^-$, $_M3^+$ sur lesquels opère la distinction réalisée par le neurone successeur concerné c'est-à-dire après extraction des groupes ou sous-groupes homogènes distingués par le groupe ou sous-groupe précédent.

Parmi les exemples, le neurone père tend à distinguer deux sous-groupes d'exemples proches de la répartition prédéfinie.

Un premier exemple de répartition des classes en deux sous-groupes de classes a déjà été décrit isolant une classe particulière des autres classes formant entre elles l'ensemble des classes d'exemples.

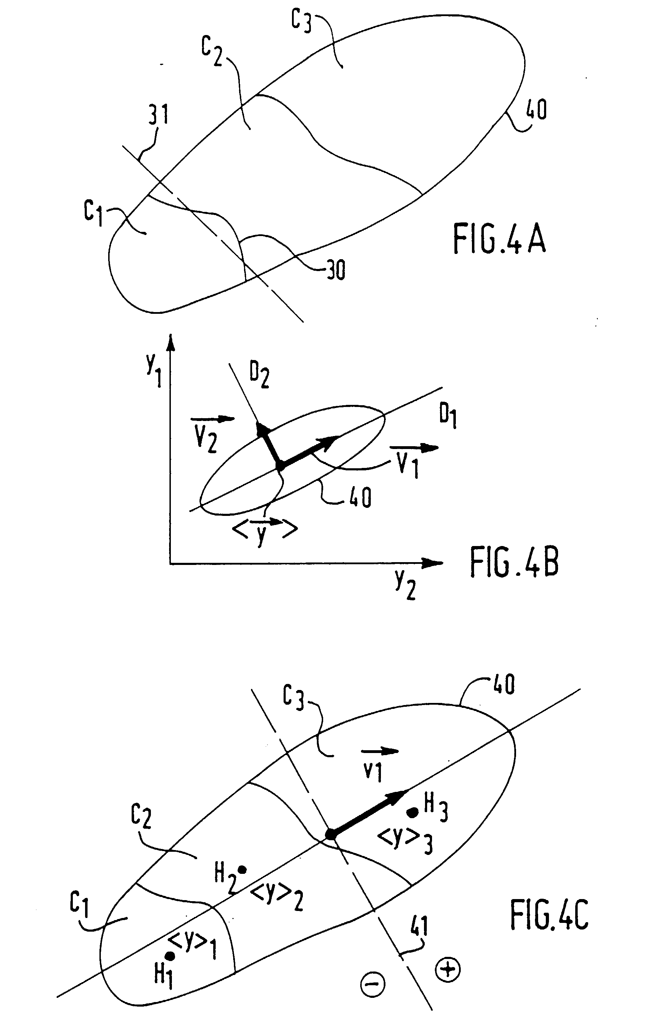

La figure 4A constitue une représentation d'un groupe M d'exemples 40 formé des classes $C_1$, $C_2$ et $C_3$. La limite de la classe $C_1$ est formée par la courbe 30. Le calcul des coefficients synaptiques du neurone va consister à isoler au mieux la classe $C_1$ et à placer un séparateur formé ici par la droite 31.

Un second exemple de répartition peut consister à calculer préalablement un critère d'erreurs pour chacune des classes d'exemples. On définit alors un critère d'erreurs évaluant la meilleure répartition. C'est la classe particulière ainsi isolée par cette meilleure répartition qui est sélectionnée pour effectuer l'apprentissage de chaque neurone donc pour déterminer ses coefficients synaptiques.

Le premier et le second exemple de répartition peuvent conduire à des arbres de grande taille (grand nombre de neurones) et de grande profondeur (grand nombre de neurones à mettre à jour) ce qui peut constituer un handicap. Pour cette raison on peut leur préférer d'autres types de répartition.

Un troisième exemple de répartition vers laquelle doit tendre le neurone peut consister à exploiter une analyse en composantes principales de la distribution d'exemples. L'analyse en composantes principales est une méthode statistique qui permet de décrire un ensemble de N vecteurs $\vec{y}^\mu$ (points dans un espace à d dimensions) à l'aide d'un vecteur moyen

$$\langle \vec{y} \rangle = \frac{1}{N} \sum_\mu y^\mu$$

de d directions principales et les d variances correspondantes $\sigma^2$. La méthode est détaillée dans "Eléments d'Analyse de Données" de E. DIDAY, J. LEMAIRE, J. POUGET, E. TESTU, Editeur Dunod (1982) p.167.

Le cas simple de la figure 4B représente une distribution 40 dans un espace à deux dimensions avec un rapport des écarts type $\sigma 1 / \sigma 2$ sensiblement égal à 3. Pour cette distribution on définit une moyenne $\langle \vec{y} \rangle$ et des composantes principales $\vec{V}_1$, $\vec{V}_2$ selon des directions propres $D_1$, $D_2$. Si on classe les composantes principales par variances décroissantes, la première direction propre indique la direction selon laquelle la norme de $(\vec{y}^{\mu} - <\vec{y}>)$ varie le plus avec l'exemple $\mu$. Lorsqu'on dispose d'un ensemble d'exemples $\vec{y}^{\mu}$ attribués aux classes $C_1$, $C_2$,...,$C_k$, auxquels on veut appliquer un séparateur linéaire (neurone) pour progresser dans la classification à k classes, il semble avantageux de séparer les k classes en deux groupes disjoints $G_+/G_-$ de la façon suivante :

i) on calcule la moyenne $<\vec{y}>$ et la première composante principale $\vec{V}_1$ de l'ensemble des exemples $\vec{y}^{\mu}$, en effectuant par exemple une analyse en composantes principales complète par calcul et diagonalisation de la matrice de covariance suivi du choix de la composante de variance maximum,

ii) on calcule les centres de gravité correspondant à chaque classe C :

$$<\vec{y}>_C = \frac{1}{N_C} \sum_C y^{\mu}$$

où $\sum_C$ indique une sommation sur les exemples dont la classe est C, Nc le nombre d'exemples de la classe C,

iii) on regroupe dans $G_+$ les classes dont le centre de gravité vérifie :

$$(<\vec{y}>_c - <\vec{y}>). \vec{V}_1 > 0$$

et les autres classes dans G-.

La méthode d'analyse en composantes principales est illustrée par la figure 4C pour une distribution à deux dimensions et trois classes. La distribution 40 comprend les classes $C_1$, $C_2$, $C_3$ ayant chacune une valeur moyenne $<y>_1$, $<y>_2$, $<y>_3$ et un centre de gravité $H_1$, $H_2$, $H_3$. Selon i) le calcul de la moyenne et du premier vecteur principal détermine $<y>$ et $\vec{V}_1$. Selon ii) le calcul des centres de gravité associés aux classes détermine $H_1$, $H_2$, $H_3$. Le regroupement des classes selon iii) permet de répartir les trois classes en deux sous-groupes de classes à l'aide du séparateur 41.

Dans ce cas la répartition des exemples en deux sous-groupes de classes effectue une répartition par rapport à un axe passant par le centre de gravité de la distribution d'exemples, perpendiculairement à une direction principale, ledit centre et ladite direction principale étant déterminés lors de l'analyse en composantes principales. L'avantage essentiel de cette méthode par rapport à d'autres choix (sélection d'une classe par exemple) est que le séparateur linéaire sera plus équilibré c'est-à-dire qu'il séparera les exemples en deux sous-ensembles de population moins différentes.

Un quatrième exemple de répartition peut consister à exploiter des résultats déjà connus sur un réseau de neurones en couches. En effet un tel réseau de neurones qui a déjà subi un apprentissage pour l'adapter à une tâche identique ou semblable possède des coefficients synaptiques déjà déterminés. La couche d'entrée d'un tel réseau de neurones en couches comprend des neurones qui opèrent également une fonction de séparateur. Sur le groupe d'exemples M à traiter il est ainsi possible de déterminer sur cette couche d'entrée le neurone opérant la séparation en deux sous-groupes qui soit la plus proche de la répartition souhaitée.

Ces quatre exemples de répartition mise en oeuvre par les neurones ne constituent pas une liste limitative et d'autres choix peuvent être opérés selon l'invention.

Les apprentissages effectués par les neurones afin de déterminer leurs coefficients synaptiques pour approcher au mieux les sous-groupes de classes désirés sont préférentiellement effectués selon l'algorithme Pocket utilisé par M. MEZARD et J.P. NADAL dans "Learning in Feedforward Layered networks : the tiling algorithm" J. Phys. A : Math. Gen. 22 (1989) p. 2191-2203 et décrit par S. GALLANT "Optimal Linear Discriminants" IEEE proc. 8th. Conf. on Pattern Recognition, Paris (1986).

Pour cela pour chaque exemple choisi au hasard on calcule le potentiel de sorties d'un neurone. Si ce potentiel satisfait le critère de stabilité ($S \geq 0$) on choisit un autre exemple. Si ce potentiel ne satisfait pas le critère de stabilité ($S < 0$) on calcule des nouveaux coefficients synaptiques qui servent à la mise à jour des anciens coefficients synaptiques uniquement s'ils satisfont un critère d'erreurs minimal. Tous les exemples sont ainsi utilisés pour déterminer les coefficients synaptiques du neurone concerné, l'algorithme 'Pocket' convergeant vers des coefficients synaptiques optimaux pour opérer la dichotomie de la classe inhomogène.

Cet algorithme (tiling) a été conçu pour construire un réseau de neurones multicouches en ajoutant des neurones jusqu'à ce que le code représenté (+/-;1/0) par les unités de la couche en cours soit fidèle, c'est-à-dire que deux exemples de classes différentes n'aient pas le même code sur l'ensemble de la couche concernée. Chaque couche est ainsi construite à partir des exemples de la couche précédente jusqu'à ce que l'on ait une couche à un seul neurone.

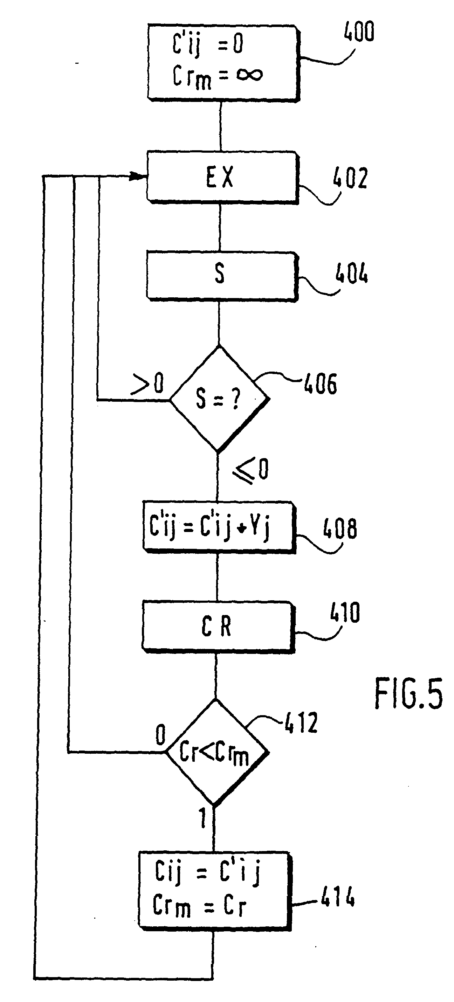

La figure 5 représente l'organigramme de l'algorithme Pocket qui opère la séparation d'un groupe d'exemples en deux groupes.

Pour un neurone donné on initialise ses coefficients synaptiques $C_{ij}$ à zéro et on initialise un critère d'erreurs maximum $CR_m$ à une valeur très élevée (étape 400). On tire aléatoirement un exemple EX (étape 402) pour lequel on détermine (étape 404) une valeur de stabilité S telle que :

$$S = \sum_{j=0}^{N} C_{ij} \cdot Y_j^{\mu}$$

où i est l'indice du neurone en cours d'analyse

j est l'indice des neurones ou des entrées qui lui sont connectés

$Y_j^{\mu}$ est la composante j de l'exemple $\mu$ présenté à l'entrée du neurone i.

Cette stabilité S est testée (étape 406). Si elle est positive, la stabilité est suffisante et on choisit un autre exemple.

Si cette stabilité S est négative ou nulle des coefficients synaptiques $C'_{ij}$ sont déterminés tel que : $C'_{ij}$ (nouveau) = $C'_{ij}$ (ancien) + $Y_j$ (étape 408).

Chaque nouveau coefficient synaptique $C'_{ij}$ ainsi déterminé doit satisfaire un critère d'erreurs CR (étape 410) qui détermine par exemple le nombre d'exemples pour lesquels la stabilité est du mauvais signe. Si ce critère CR est inférieur à une valeur maximale $CR_m$ du critère (étape 412), les coefficients synaptiques $C'_{ij}$ déterminés servent à mettre à jour (étape 414) les coefficients synaptiques $C_{ij}$ préalablement mémorisés.

De même la valeur maximale $CR_m$ est mise à jour. Tous les exemples sont ainsi successivement utilisés pour calculer puis éventuellement mettre à jour les coefficients synaptiques de ce neurone i. A l'issue de cet apprentissage, la séparation opérée par ce neurone i est testée en déterminant pour un exemple d'un groupe donné le résultat obtenu (séparation en deux groupes de classes +/-;1/0). Si la séparation ne délivre pas des groupes de classes homogènes un autre neurone est ajouté dans la couche et l'algorithme Pocket est mis en oeuvre à nouveau de la même manière.

Cet algorithme ne peut différencier que deux types de groupes de classes +/- (ou 1/0) obtenus en sortie du neurone. Il ne peut donc pas opérer directement sur des exemples d'apprentissage répartis sur un plus grand nombre de classes A, B, C, D...

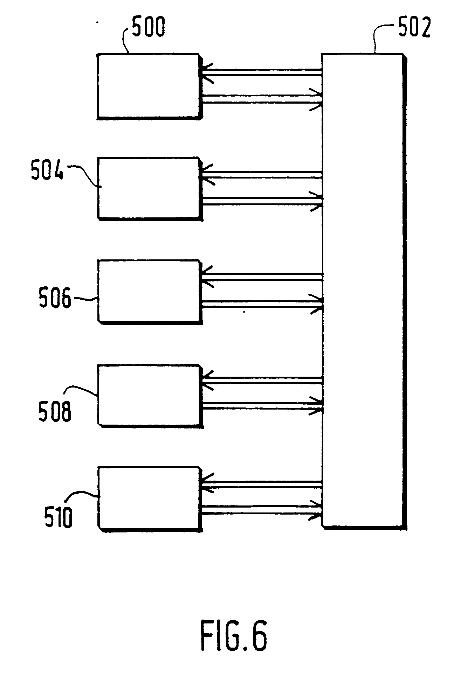

L'invention concerne également un réseau de neurones organisé en arbre dont une représentation schématique est fournie par la figure 6. Le réseau comprend une unité de calcul 500 qui détermine les états de sortie $V_i$ des neurones à partir des potentiels d'entrée $V_j$ selon :

$$V_i = \Sigma C_{ij} \cdot V_j$$

où $C_{ij}$ sont les coefficients synaptiques qui relient le neurone i aux entrées j (ou neurone j).

Cette unité de calcul 500 opère selon les mécanismes connus de l'homme du métier décrit par exemple dans l'article de R.P. LIPPMANN déjà cité.

Lors de l'apprentissage d'un neurone quelconque son neurone successeur sera différent selon le résultat délivré par ce neurone quelconque. Pour utiliser le réseau de neurones, il est donc nécessaire de déterminer le neurone successeur selon le résultat délivré par le neurone quelconque. Pour cela une mémoire d'adresses 504 reçoit une adresse correspondant audit résultat et délivre en retour une adresse de neurone successeur.

Lors de l'étape d'apprentissage proprement dite les neurones sont créés comme cela a été préalablement défini, l'ordre de succession des neurones successeurs est ainsi déterminé et la mémoire 504 est chargée. Ainsi le réseau de neurones est muni d'une mémoire qui stocke un dictionnaire d'adresses qui, selon le résultat obtenu sur un neurone quelconque, met en oeuvre un neurone suivant selon une organisation en arbre. L'adressage de n'importe quelle branche de l'arbre est ainsi réalisé rapidement avec peu de matériel. Une mémoire de classes 506 stocke les classes séparées par l'arbre de neurones.

Lors de l'étape d'exploitation du réseau de neurones en arbre, la mémoire est adressée par les résultats délivrés par les neurones et fournit en retour l'adresse des N neurones successeurs. Cet échange s'effectue à travers un calculateur hote 502 qui gère l'ensemble des échanges des différentes unités entre elles et notamment l'échange de chaque groupe ou sous-groupe que doit recevoir chaque neurone.

Lorsqu'une extrémité d'une branche de l'arbre est atteinte la classe correspondante est lue dans la mémoire de classes (506). Avantageusement cela permet d'opérer rapidement une détermination des classes homogènes d'exemples. Les exemples sont stockés dans une mémoire d'exemples 508. Une mémoire 510 d'allocation des exemples permet de sélectionner les sous-groupes d'exemples qui doivent être traités par un neurone déterminé. Il est possible que le réseau de neurones dispose d'un certain nombre de neurones parmi lesquels la méthode d'apprentissage détermine les neurones qui vont constituer l'arbre. Mais il est également possible que la méthode d'apprentissage soit mise en oeuvre dans un matériel distinct pour déterminer le nombre de neurones, leurs coefficients synaptiques, l'ordre de succession des neurones, les classes à distinguer et leur nombre. Tous ces paramètres sont alors utilisés pour construire le réseau de neurones dédié à la tache de classification apprise. Ce réseau de neurones ne dispose alors pas de possibilités d'apprentissage mais uniquement de celle de classification (répétition de la méthode apprise). Un réseau en arbre de ce type peut d'ailleurs être déterminé à partir d'une autre méthode d'apprentissage.

**Revendications**

1. Procédé de classification mis en oeuvre dans un réseau de neurones en arbre, comprenant des étapes d'apprentissage au cours desquelles le réseau de neurones détermine des coefficients synaptiques pour classifier un groupe d'exemples répartis sur plusieurs classes, caractérisé en ce que pour opérer des classifications sur plus de 2 classes, l'apprentissage comprend les étapes suivantes :

A - répartition des classes relatives aux exemples à classer suivant deux sous-groupes de classes,

B - calcul des coefficients synaptiques d'un neurone pour qu'il tende à distinguer, parmi le groupe d'exemples, deux sous-groupes d'exemples approchant le mieux possible la répartition suivant lesdits deux sous-groupes de classes,

C - test de l'homogénéité des sous-groupes d'exemples distingués pour déterminer s'ils renferment une classe unique,

D - lorsqu'un neurone distingue une classe unique, mémorisation de l'adresse dudit neurone et mémorisation de ladite classe unique, ce procédé étant caractérisé en ce que

E - lorsqu'un neurone distingue un sous-groupe inhomogène, répartition de chaque sous-groupe d'exemples inhomogène en deux nouveaux sous-groupes de classes en reprenant le procédé à l'étape A, puis génération d'un neurone successeur pour chaque sous-groupe d'exemples inhomogène et mémorisation de l'adresse dudit neurone successeur, le procédé étant répété jusqu'à ce que les nouveaux sous-groupes d'exemples distingués par les neurones successeurs correspondent tous à un sous-groupe de classe homogène, et à chaque réitération de l'étape A, la répartition des classes en deux sous-groupes de classes isole une classe particulière des autres classes formant entre elles l'ensemble des classes d'exemples.

2. Procédé selon la revendication 1 caractérisé en ce que la classe particulière est déterminée en calculant préalablement un critère d'erreurs pour chacune des classes d'exemples et en sélectionnant la classe ayant le critère d'erreurs le plus petit.

3. Procédé selon la revendication 1 caractérisé en ce qu'à chaque réitération de l'étape A, la répartition des classes est obtenue en sélectionnant une répartition déjà opérée par un réseau de neurones en couches.

4. Procédé selon la revendication 1 caractérisé en ce qu'à chaque réitération de l'étape A, la répartition des exemples en deux sous-groupes de classes effectue une répartition par rapport à un axe passant par le centre de gravité de la distribution d'exemples, perpendiculairement à une direction principale, ledit centre et ladite direction principale étant déterminés par une analyse en composantes principales.

5. Procédé selon la revendication 3 caractérisé en ce que les coefficients synaptiques initiaux du neurone sont déterminés à partir d'un réseau de neurones en couches en y sélectionnant les coefficients synaptiques d'un neurone qui sépare une classe approchant au mieux ladite classe particulière.

6. Procédé selon une des revendications 1 à 4 caractérisé en ce que le calcul des coefficients synaptiques met en oeuvre soit l'algorithme "Pocket" soit une règle d'apprentissage de type "Perceptron" soit une règle d'apprentissage de type "Hebb".

7. Réseau de neurones comprenant des bornes d'entrée qui recoivent des vecteurs de mots de données à classifier, des neurones qui sont reliés aux bornes d'entrée, des coefficients synaptiques qui définissent les forces de liaison entre les neurones, les neurones étant connectés entre eux selon une organisation en arbre, les neurones délivrant des résultats à deux états répartis en deux sous-groupes caractérisé en ce qu'il opère la classification de mots de données d'entrée réparties sur plus de deux classes, le nombre de neurones, leurs coefficients synaptiques, l'ordre de succession des neurones, les classes à distinguer et le nombre de classes étant préalablement déterminés par une méthode d'apprentissage spécifique à la classification à effectuer, le réseau comprenant:

- une unité de calcul (500) renfermant les neurones,
- un premier (504) organe de mémorisation pour stocker l'ordre de succession des neurones de l'arbre, le premier organe étant adressé par lesdits états des résultats des neurones,
- un second (506) organe de mémorisation pour stocker lesdites classes à distinguer,
- un calculateur hôte (502) pour tester l'homogénéité des sous-groupes délivrés par chaque neurone en déterminant si chaque sous-groupe renferme une classe unique,
- et lorsque l'homogénéité d'un sous-groupe est satisfaite, le calculateur hôte (502) adresse le second organe de mémorisation (506) pour délivrer la classe distinguée, ce réseau caractérisé en ce que
- lorsque l'homogénéité n'est pas satisfaite, le calculateur hôte adresse le premier organe de mémorisation (504) qui donne l'adresse du neurone successeur de l'arbre, l'organisation en arbre du réseau de neurones est telle que le nombre de neurones, les coefficients synaptiques et l'ordre de succession des neurones sont issus d'un apprentissage par dichotomies successives séparant, en classes homogènes, une base d'exemples de mots de données.

## Patentansprüche

1. Klassifikationsverfahren, das in einem neuronalen Netz mit Baumstruktur eingesetzt wird und Lernschritte umfaßt, während derer das neuronale Netz synaptische Koeffizienten bestimmt, um eine Gruppe von auf mehrere Klassen verteilten Beispielen zu klassifizieren, dadurch gekennzeichnet, daß zur Ausführung der Klassifikationen nach mehr als zwei Klassen die Lernphase die folgenden Schritte umfaßt:

   A - Verteilung der Klassen, die sich auf die zu klassifizierenden Beispiele beziehen, nach zwei Untergruppen von Klassen,
   B - Berechnung der synaptischen Koeffizienten eines Neurons, so daß es dazu tendiert, innerhalb der Gruppe von Beispielen zwischen zwei Untergruppen zu unterscheiden, die der Verteilung entsprechend der genannten Untergruppen von Klassen bestmöglich nahekommen,
   C - Prüfung der Homogenität der unterschiedenen Untergruppen von Beispielen, um zu bestimmen, ob sie eine einzige Klasse einschließen,
   D - wenn ein Neuron eine einzige Klasse unterscheidet, Speicherung der Adresse des genannten Neurons und Speicherung der genannten einzigen Klasse, dadurch gekennzeichnet, daß
   E - wenn ein Neuron eine nicht-homogene Untergruppe unterscheidet, Unterscheidung jeder nicht-homogenen Untergruppe von Beispielen auf zwei neue Untergruppen von Klassen, indem das Verfahren aus Schritt A wieder eingeleitet wird, danach Erzeugung eines Folgeneurons für jede nicht-homogene Untergruppe von Beispielen und Speicherung der Adresse des genannten Folgeneurons, wobei das Verfahren wiederholt wird, bis die neuen, durch die Folgeneuronen unterschiedenen Untergruppen alle einer Untergruppe mit homogener Klasse entsprechen, und daß bei jeder Wiederholung des Schritts A, die Verteilung der Klassen in zwei Unterklassen eine besondere Klasse von den anderen Klassen isoliert, die untereinander die Menge der Klassen von Beispielen bilden.

2. Verfahren nach Anspruch 1, dadurch gekennzeichnet, daß die besondere Klasse bestimmt wird, indem zuvor ein Fehlerkriterium für jede der Klassen von Beispielen berechnet wird und die Klasse mit dem kleinsten Fehlerkriterium selektiert wird.

3. Verfahren nach Anspruch 1, dadurch gekennzeichnet, daß bei jeder Wiederholung des Schritts A die Verteilung der Klassen erhalten wird, indem eine bereits von einem geschichteten neuronalen Netz vorgenommene Verteilung ausgewählt wird.

4. Verfahren nach Anspruch 2, dadurch gekennzeichnet, daß bei jeder Wiederholung des Schritts A die Verteilung der Beispiele auf zwei Untergruppen von Klassen eine Verteilung bezüglich einer Achse vornimmt, die durch den Schwerpunkt der Distribution von Beispielen geht, senkrecht zu einer Hauptrichtung, wobei der genannte Schwerpunkt und die genannte Hauptrichtung durch Zerlegung in Hauptkomponenten bestimmt werden.

5. Verfahren nach Anspruch 3, dadurch gekennzeichnet, daß die anfänglichen synaptischen Koeffizienten des Neurons aufgrund eines geschichteten neuronalen Netzes bestimmt werden, indem darin die synaptischen Koeffizienten eines Neurons ausgewählt werden, das eine Klasse unterscheidet, die der genannten besonderen Klasse bestmöglich nahekommt.

6. Verfahren nach einem der Ansprüche 1 bis 4, dadurch gekennzeichnet, daß die Berechnung der synaptischen Koeffizienten einen "Pocket"-Algorithmus, eine Lernregel vom "Perceptron"-Typus oder eine Lernregel vom "Hebb"-Typus anwendet.

7. Neuronales Netz, das Eingangsklemmen umfaßt, die die Vektoren von zu klassifizierenden Datenwörtern empfangen, Neuronen, die mit den Eingangsklemmen verbunden sind, synaptische Koeffizienten, die die Verbindungskräfte zwischen den Neuronen definieren, wobei die Neuronen untereinander einer Baumstruktur entsprechend verbunden sind, die Neuronen auf zwei Untergruppen verteilte Ergebnisse mit zwei Zuständen liefern, dadurch gekennzeichnet, daß es die Klassifikation von auf mehr als zwei Klassen verteilten Eingangsdatenwörtern vornimmt, wobei die Anzahl Neuronen, deren synaptische Koeffizienten, die Abfolgeordnung der Neuronen, die zu unterscheidenden Klassen und deren Anzahl zuvor mittels eines Lernverfahrens bestimmt werden, das für die vorzunehmende Klassifikation spezifisch ist, wobei das Netz folgendes umfaßt:

   - eine erste Recheneinheit (500), die die Neuronen enthält,
   - ein erstes Speicherorgan (504) zur Speicherung der Abfolgeordnung der Neuronen des Baums, wobei das erste Speicherorgan durch die genannten Zustände der Ergebnisse der Neuronen adressiert wird,
   - ein zweites Speicherorgan (506) zur Speicherung der genannten zu unterscheidenden Klassen,
- einen Host-Rechner (502), um die Homogenität der von jedem Neuron gelieferten Untergruppen zu prüfen, indem er bestimmt, ob jede Untergruppe eine einzige Klasse einschließt,
- und der Host-Rechner (502) das zweite Speicherorgan adressiert, um die unterschiedene Klasse zu übergeben, wenn die Homogenität erfüllt ist, dadurch gekennzeichnet, daß der Host-Rechner (502) das erste Speicherorgan (504) adressiert, das die Adresse des Folgeneurons liefert, wenn die Homogenität nicht erfüllt ist, die Baumstruktur des neuronalen Netzes so ist, daß die Anzahl Neuronen, die synaptischen Koeffizienten und die Abfolgeordnung aus einer Lernphase durch aufeinanderfolgende Dichotomien hervorgehen, die eine Basis von Beispielen von Datenwörtern in homogene Klassen trennen.

## Claims

1. A classification procedure implemented in a tree-like neural network, comprising learning steps in the course of which the neural network determines synaptic coefficients in order to classify a group of examples divided into several classes, characterised in that, in order to perform classifications over more than 2 classes, the learning comprises the following steps:

   A - division of the classes relating to the examples to be classed in accordance with two subgroups of classes,
   B - computation of the synaptic coefficients of a neuron in order that it tends to distinguish, from the group of examples, two subgroups of examples approximating as well as possible the division in accordance with said two subgroups of classes,
   C - test of the homogeneity of the subgroups of examples distinguished, in order to determine whether they encompass a single class,
   D - when a neuron distinguishes a single class, storage of the address of said neuron and recording of said single class, the procedure being characterized in that
   E - when a neuron distinguishes an inhomogeneous subgroup, division of each homogeneous subgroup of examples into two new subgroups of classes by restarting the procedure at step A, then generation of a successor neuron for each inhomogeneous subgroup of examples and recording of the address of said successor neuron, the procedure being repeated until all the new subgroups of examples distinguished by the successor neurons correspond to a homogeneous class subgroup, and at each repetition of step A, the division of the classes into two subgroups of classes isolates a particular class from the other classes forming amongst themselves the set of classes of examples.

2. A procedure as claimed in Claim 1, characterised in that the particular class is determined by initially computing an error criterion for each of the classes of examples and by selecting the class having the smallest error criterion.

3. A procedure as claimed in Claim 1, characterised in that, at each repetition of step A, the division of the classes is obtained by selecting a division already performed by a layered neuron network.

4. A procedure as claimed in Claim 1, characterised in that, at each repetition of step A, the division of the examples into two subgroups of classes effects a division relative to an axis passing through the centre of gravity of the distribution of examples, perpendicular to a principal direction, said centre and said principal direction being determined by a principal component analysis.

5. A procedure as claimed in Claim 3, characterised in that the initial synaptic coefficients of the neuron are determined from a layered neural network by selecting therein the synaptic coefficients of the neuron which separates a class best approximating said particular class.

6. A procedure as claimed in any one of Claims 1 to 4, characterised in that the computation of the synaptic coefficients implements either the "Pocket" algorithm or a "perceptron"-type learning rule, or a "Hebb"-type learning rule.

7. A neural network comprising input terminals which receive vectors of data words to be classified, neurons which are linked to the input terminals, synaptic coefficients which define the link forces between the neurons, the neurons being interconnected according to a tree-like organisation, the neurons delivering two-state results divided into two subgroups, is characterised in that it performs the classification of input data words divided into more than two classes, the number of neurons, their synaptic coefficients, the order of succession of the neurons, the classes to be distinguished and their number being previously determined by a learning method specific to the classification to be effected, the network comprising:

   - a computation unit (500) encompassing the neurons,

- a first storage medium (504) for storing the order of succession of the neurons of the tree, the first medium being addressed by said neuron result states,
- a second storage medium (506) for storing said classes to be distinguished,
- a host computer (502) for testing the homogeneity of the sub-groups delivered by each neuron by determining whether each sub-group encompasses a single class,
- and when the homogeneity of a sub-group is satisfied, the host computer (502) addresses the second storage medium (506) in order to deliver the class distinguished, the network being characterised in that,
- when the homogeneity is not satisfied, the host computer addresses the first storage medium (504) which gives the address of the successor neuron of the tree, the tree-like organisation of the neuron network being such that the number of neurons, the synaptic coefficients and the order of succession of the neurons are obtained from a learning procedure by way of successive dichotomies separating a base of data word examples into homogeneous classes.

FIG.1A

FIG.1B

M — 200

$k \rightarrow 2$ — 202

N1 — 203

$M_+^1$          $M_-^1$

222          220          210          212

$K_0$     $M_+^1$          $M_-^1$     $K_1$
1                                    1

0                                    0

$M_+^1$ — 224          $M_-^1$ — 214

$k \rightarrow 2$ — 226          $k \rightarrow 2$ — 216

N2 — 227          N3 — 217

$M_+^2$          $M_-^2$          $M_+^3$          $M_-^3$

242  240          260  262          252  250          230

$K_2$  $M_+^2$          $M_-^2$  $K_4$          $K_5$  $M_+^3$          $M_-^3$  $K_3$
1                        1          1                        1

0                        0          0                        0 — 232

$M_+^2$          $M_-^2$          $M_+^3$          $M_-^3$

FIG.2

M

$M_+^1$          $M_-^1$

$M_+^3$     $M_-^3$

FIG.3          N5 →     $M_+^5$ $M_-^5$

I

M

N1 ←

$M_-^1$

N3 ←

$M_+^3$

←

FIG.4A

FIG.4B

FIG.4C

**FIG.5**

FIG.6